# EUROPEAN PATENT SPECIFICATION

(11) **EP 2 938 915 B1**
(45) Date of publication and mention of the grant of the patent: **01.02.2017**
(21) Application number: 13817701.9
(22) Date of filing: 19.12.2013
(51) Int. Cl.: F16L 39/00, F16L 41/08

(54) **SEALING ELEMENT AND ARRANGEMENT**
DICHTELEMENT UND -ANORDNUNG
ELÉMENT ET SYSTÈME D'ÉTANCHÉITÉ

(30) Priority: 31.12.2012 FI 20126394
(43) Date of publication of application: 04.11.2015
(73) Proprietor: Wärtsilä Finland Oy, 65380 Vaasa (FI)
(72) Inventor: GRANLUND, Ulf, 65320 Vasa (FI)
(74) Representative: Berggren Oy
(86) International application number: PCT/FI2013/051185
(87) International publication number: WO 2014/102453

(56) References cited:
- US-A- 4 832 511

## Description

### Technical field of the invention

This invention relates to a sealing element and to a sealing arrangement for sealing a joint between a pipe and a mating surface.

### Background of the invention

Pipe connections are used in systems which are transporting liquids or gases to keep transported substance inside the system. Making pipe connections between separate units/blocks involves always need for proper pipe sealing. Especially in places where the connected units are non-movable and there are several pipe connections close to each other the connections with easy and secure sealing are demanding.

In prior art there are known many techniques to seal pipe connections. The aim of these sealed connections is to produce a secure sealing with care free use and easy maintenance when needed. Some prior art joint and sealed structures/connections are presented in US 4 832 511 A (corresponding to the preamble of claim 1) US 5 108 132 A, EP 1 909 017 A1 and CN 201884831.

In US 5 108 132 is described a split flange assembly with a split spacer for a hose coupling. The assembly is sealed with two sealing points. The first sealing is an O-ring between the flange and the block. The second sealing is a split spacer between the flange and a split flange connector. This sealing is made with a split spacer, which has a rigid 2-piece body and an O-ring to keep the spacer parts together. The sealing is achieved with two separate grooves in the hose coupling for two different sized seals.

In EP 1909017 A1 is described a connecting structure for an integration panel and fluid device. This structure has an annular gasket with projections which fit to annular grooves in the integration panel and in the fluid device. This annular gasket can only be removed and the connection disassembled when the connected surfaces (integration panel and fluid device) are moved perpendicularly apart.

In CN 201884831 is described a pipeline connection having male and female connecting parts. This connection is sealed with two different size O-rings between the male and female connecting parts. Both of these O-rings have separate grooves for them. One of the O-rings is in the female part and one in the male part. This connection can also be disassembled when the connected surfaces are moved perpendicularly apart.

In many pipe connections there are several pipes to be connected in a small area leading to very small distances between the pipes. Also, the pipes are often assembled between two solid connection blocks or similar solid structures. This creates many problems for the secure sealing of the pipes to the solid connection block.

### Summary of the invention

An object of the present invention is to provide an improved sealing element for a pipe connection. Another object of the invention is to provide an improved sealing arrangement for sealing a joint between a pipe and a mating surface, in which joint the pipe extends perpendicularly away from the mating surface. The sealing element according to the invention comprises an annular body and it is provided with a first elastic member, which is arranged on the inner perimeter of the body, and with a second elastic member, which is arranged on an end surface of the body, and is defined in claim 1.

The sealing arrangement according to the invention comprises a sealing element defined above, the sealing element being arranged around the pipe and against the mating surface.

With the sealing element and the sealing arrangement according to the invention, connections between a mating surface and one or more pipes can be sealed reliably. The pipes and the sealing elements are also very easy to assemble and remove, even when the pipes are arranged between two solid objects.

According to the invention. the bodv comprises a middle part and a first flange and a second flange, which flanges are arranged on the edges of the middle part and extend from the middle part towards the center axis of the body. According to an embodiment of the invention, the first elastic member is arranged on the inner perimeter of the middle part of the body between the first flange and the second flange, and the second elastic member is arranged on the outer surface of the first flange. A body with flanges is rigid and protects the elastic member that is located in a pipe assembly between the pipe and the body.

According to the invention. the inner diameter of the first elastic member is smaller than the inner diameter of the first and the second flanges of the body. According to another embodiment of the invention, the inner diameter of the second elastic member is greater than the inner diameter of the first flange of the body. With this dimensioning, the first elastic member is responsible solely for the axial sealing, whereas the second elastic member is responsible solely for the radial sealing. This ensures that both seals function properly.

According to another embodiment of the invention, the body of the sealing element is made of metal or alloy. Also other materials, which are rigid enough, can be used.

According to another embodiment of the invention, the elastic members are vulcanized on the body. This makes the construction durable. However, the elastic members could also be O-rings, in which case the sealing element can be manufactured using standard seals.

According to an embodiment of the invention, the arrangement comprises a pressing element having an opening for the pipe, the pressing element being arranged around the pipe for pressing the sealing element against the mating surface. With the pressing element, the second elastic member can be squeezed for ensuring good radial sealing.

According to another embodiment of the invention, the cross-section of the pressing element around the opening is L-shaped and opens towards the mating surface and the pipe. A rectangular space is thus formed between the pressing member, the mating surface and the pipe for accommodating the sealing element.

According to another embodiment of the invention, the pressing element is provided with a plurality of openings for accommodating a corresponding number of pipes and sealing elements. One pressing element can thus be used for securing several sealing elements that are used around pipes, which are located close to each other.

According to another embodiment of the invention, the arrangement comprises fastening members for attaching the pressing element to the mating surface. The fastening members can be, for instance, bolts.

### Brief description of the drawings

In the following the invention is described in more detail by referring to the drawings where,
- Fig. 1: is a cross-sectional view of a pipe sealing arrangement,
- Fig. 2: is a top view of a pressing element of the sealing arrangement, and
- Fig. 3: is a cross-sectional view of a sealing element.

### Description of embodiments of the invention

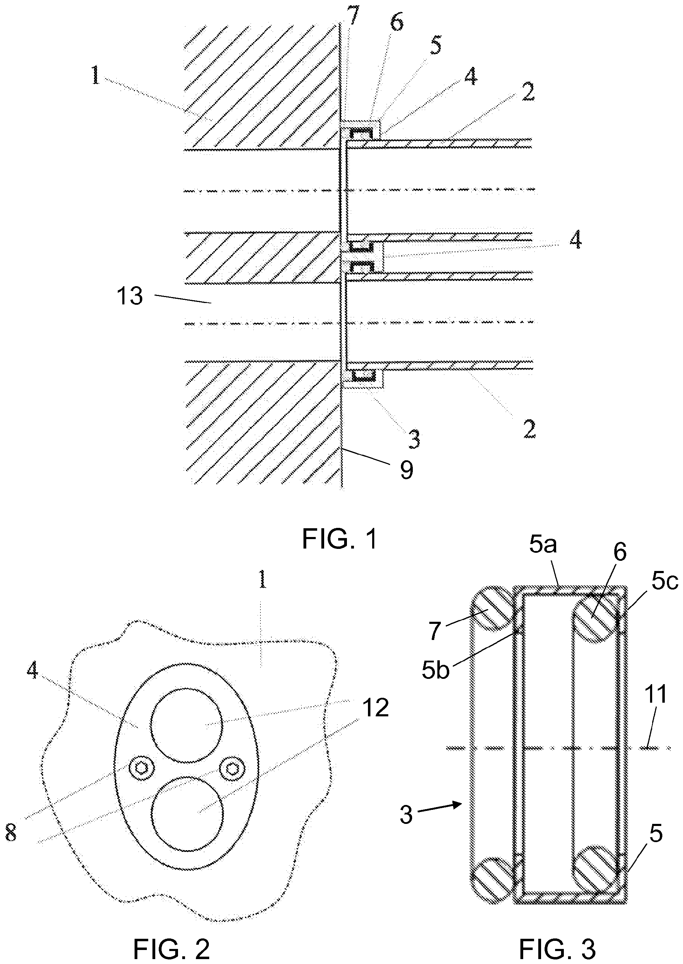

In figure 1 is shown a sealing arrangement according to an embodiment of the invention. The sealing arrangement is used for sealing a joint between a pipe 2 and a mating surface 9. The pipe 2 extends perpendicularly away from the mating surface 9. In figure 3 is shown a sealing element 3, which is used in the sealing arrangement of figure 1. The sealing element 3 comprises an annular body 5, a first elastic member 6, and a second elastic member 7. The first elastic member 6 is arranged on the inner perimeter of the rigid body 5, and the second elastic member 7 is arranged on an end surface of the body 5. The body 5 of the sealing element 3 is made of a rigid material, such as metal, alloy, plastic, or composite material. The elastic members 6, 7 are made of rubber or similar elastic material. The elastic members 6, 7 can be vulcanized on the body 5, or they can be attached to the body 5 for example by using bonding agent. In the embodiment of the figures, the cross-section of the elastic members 6, 7 is circular, but also other shapes are possible to use. The first and the second elastic member 6, 7 can have different cross-sectional shapes. The elastic members 6, 7 can be O-rings. The body 5 of the sealing element 3 comprises a middle part 5a, a first flange 5b, and a second flange 5c. The flanges 5b, 5c are arranged on the edges of the middle part 5a of the body 5 and extend towards the center axis 11 of the body 5. The profile of the body 5 is thus U-shaped and opens towards the center axis 11, i.e. inwards. The first elastic member 6 is on the inner surface of middle part 5a of the body 5 between the first and the second flanges 5b, 5c. The second elastic member 7 is on the outer surface of the first flange 5b of the body 5. The outer diameter of the first elastic member 6 is approximately the same as the inner diameter of the middle part 5a of the body 5. The inner diameter of the first elastic member 6 is chosen to be smaller than the inner diameter of the first and the second flanges 5b, 5c of the body 5. The first elastic member 6 extends thus inwards from the edges of the first and the second flanges 5b, 5c. The inner diameter of the second elastic member 7 is greater than the inner diameter of the first flange 5b of the body 5. The second elastic member 7 does thus not extend over the edge of the first flange 5b of the body 5. The outer diameter of the second elastic member 7 is approximately the same as the outer diameter of the body 5, but it could also be slightly smaller. Because of the dimensioning of the elastic members 6, 7, the first elastic member 6 is responsible for axial sealing and the second elastic member 7 is responsible for radial sealing.

In figure 1 is shown how the sealing element 3 is used for sealing a joint between a pipe 2 and a mating surface 9 of a connection block 1. The connection block 1 is provided with a duct 13, with which the pipe 2 is aligned. The end of the pipe 2 does not have to be against the mating surface 9, but the pipe 2 can be slightly apart from the mating surface 9. The outer diameter of the pipe 2 is slightly smaller than the inner diameter of the first and the second flanges 5b, 5c of the body 5 of the sealing element 3. The sealing element 3 is arranged around the pipe 2 and against the mating surface 9 of the connection block 1. The U-shape of the body 5 of the sealing element 3 opens towards the pipe 2. The first elastic member 6 of the sealing element 3 is thus between the pipe 2 and the body 5 of the sealing element 3. Because of the dimensioning of the first elastic member 6, it is squeezed and fills the space between the pipe 2 and the body 5 of the sealing element 3 in the radial direction, and forms a seal between the body 5 of the sealing element 3 and the outer surface of the pipe 2. The first elastic member 6 also partly fills the space between the flanges 5b, 5c of the body 5 of the sealing element 3 in the axial direction of the pipe 2. The sealing arrangement is further provided with a pressing member 4, which is a flange-like part. The pressing member 4 is provided with an opening 12 for accommodating a pipe 2, or with a plurality of openings 12, if the pressing member 4 is used for several pipes 2. In the embodiment of figures 1 and 2, the pressing member 4 is provided with two openings 12. The pressing member 4 is arranged around the pipe 2. In the axial direction of the pipe 2, the sealing element 3 is between the mating surface 9 and the pressing member 4. The pressing member 4 can thus be used for pressing the sealing element 3 against the mating surface 9. Fastening members 8, such as bolts, are used for attaching the pressing member 4 to the mating surface 9 of the connection block 1. When the pressing member 4 is attached to the connection block 1, the second elastic member 7 is squeezed between the mating surface 9 of the connection block 1 and the body 5 of the sealing element 3. The second elastic member 7 thus seals the joint between the mating surface 9 and the pipe 2 in the radial direction of the pipe 2.

The cross-section of pressing element 4 around the openings 12 is L-shaped, i.e. each opening 12 has a groove, which is open towards the mating surface 9 of the connection block 1. The pressing element 4, the mating surface 9, and the pipe 2 thus delimit a space having a rectangular cross-section for the sealing element 3. If two openings 12 are located next to each other, the two L-shaped cross-sections are joined together and there is a T-shaped cross-section between the openings 12. With the sealing arrangement according to the invention, it is possible to situate pipes 2 very close to each other. The sealing arrangement is practical especially when a pipe 2 needs to be assembled between two solid objects. Because of the construction of the sealing element 3, the pipe 2 can be shorter than the distance between the two objects. Sealing elements 3 and pressing elements 4 can be arranged around the ends of the pipe 2, and the pipe 2 can be inserted between the objects sideways, after which the pressing elements 4 can be attached to the mating surfaces 9.

The method for sealing pipe connections includes the following steps when the pipes are used for connecting two solid connection blocks 1:
- providing a pipe or pipes 2 that are slightly shorter than the distance between the two solid connection blocks 1,
- providing one sealing element 3 per pipe 2, the sealing element 3 having a rigid body 5 and two elastic members 6 and 7,
- providing a pressing element 4 with one groove for each sealing element 3,
- sliding each pipe 2 through the pressing element 4 and through the sealing element 3,
- assembling the sealing element 3 to the groove in the pressing element 4,
- moving the pipe package sideways to the connection point between the two solid connection blocks 1, and
- connecting the pressing element 4 to the connection block 1 with the fastening members 8.

If the connection includes only one solid connection block 1 the pipe length is not critical. The method is especially advantageous when the pipe package includes several pipes 2 and the distance between two solid connection blocks 1 is relatively short.

The sealing element and the sealing arrangement are especially advantageous when the connection is made between two solid connection blocks. Nevertheless, the element and the arrangement can be also used in any connections between a pipe and a solid structure. The above presented embodiments are not limiting the scope of the invention in any way. The scope of protection is determined by the following set of claims.

## Claims

1. A sealing element (3) for a pipe connection, which sealing element (3) comprises an annular body (5) and is provided with a first elastic member (6), which is arranged on the inner perimeter of the body (5), and with a second elastic member (7), which is arranged on an end surface of the body (5), in which body (5) comprises a middle part (5a) and a first flange (5b) and a second flange (5c), which flanges (5b, 5c) are arranged on the edges of the middle part (5a) and extend from the middle part (5a) towards the center axis (11) of the body (5), in which sealing element the inner diameter of the first elastic member (6) is smaller than the inner diameter of the first (5b) and the second flanges (5c) of the body (5) **characterized in that** the inner diameter of the second elastic member (7) is greater than the inner diameter of the first flange (5b) of the body (5).

2. A sealing element (3) according to claim 1, **characterized in that** the first elastic member (6) is arranged on the inner perimeter of the middle part (5a) of the body (5) between the first flange (5b) and the second flange (5c), and the second elastic member (7) is arranged on the outer surface of the first flange (5b).

3. A sealing element (3) according to claim 1 or 2, **characterized in that** the body (5) of the sealing element (3) is made of a metal or an alloy.

4. A sealing element (3) according to any of the preceding claims, **characterized in that** the elastic members (6, 7) are vulcanized on the body (5).

5. A sealing element (3) according to any of claims 1-3, **characterized in that** the elastic members (6, 7) are O-rings.

6. A sealing arrangement for sealing a joint between a pipe (2) and a mating surface (9), the pipe (2) extending perpendicularly away from the mating surface (9), **characterized in that** the arrangement comprises a sealing element (3) according to any of the preceding claims, the sealing element (3) being arranged around the pipe (2) and against the mating surface (9).

7. A sealing arrangement according to claim 6, **characterized in that** the arrangement comprises a pressing element (4) having an opening (12) for the pipe (2), the pressing element (4) being arranged around the pipe (2) for pressing the sealing element (3) against the mating surface (9).

8. A sealing arrangement according to claim 7, **characterized in that** the cross-section of the pressing element (4) around the opening (12) is L-shaped and opens towards the mating surface (9) and the pipe (2).

9. A sealing arrangement according to claim 7 or 8, **characterized in that** the pressing element (4) is provided with a plurality of openings (12) for accommodating a corresponding number of pipes (2) and sealing elements (3).

10. A sealing arrangement according to any of claims 7-9, **characterized in that** the arrangement comprises fastening members (8) for attaching the pressing element (4) to the mating surface (9).

## Patentansprüche

1. Dichtungselement (3) für eine Rohrverbindung, wobei das Dichtungselement (3) einen ringförmigen Körper (5) umfasst und mit einem ersten elastischen Verformungselement (6) versehen ist, das am inneren Umfang des Körpers (5) angeordnet ist, und mit einem zweiten elastischen Verformungselement (7), das an einer Endfläche des Körpers (5) angeordnet ist, wobei der Körper (5) einen Mittelteil (5a) und einen ersten Flansch (5b) und einen zweiten Flansch (5c) umfasst, wobei die Flansche (5b, 5c) an den Rändern des Mittelteils (5a) angeordnet sind und sich vom Mittelteil (5a) zur Mittelachse (11) des Körpers (5) erstrecken, wobei in dem Dichtungselement der Innendurchmesser des ersten elastischen Verformungselements (6) kleiner ist als der Innendurchmesser der ersten (5b) und zweiten Flansche (5c) des Körpers (5), **dadurch gekennzeichnet, dass** der Innendurchmesser des zweiten elastischen Verformungselements (7) größer ist als der Innendurchmesser des ersten Flanschs (5b) des Körpers (5).

2. Dichtungselement (3) nach Anspruch 1, **dadurch gekennzeichnet, dass** das erste elastische Verformungselement (6) am inneren Umfang des Mittelteils (5a) des Körpers (5) zwischen dem ersten Flansch (5b) und dem zweiten Flansch (5c) angeordnet ist und das zweite elastische Verformungselement (7) an der Außenfläche des ersten Flanschs (5b) angeordnet ist.

3. Dichtungselement (3) nach Anspruch 1 oder 2, **dadurch gekennzeichnet, dass** der Körper (5) des Dichtungselements (3) aus einem Metall oder einer Legierung hergestellt ist.

4. Dichtungselement (3) nach einem der vorstehenden Ansprüche, **dadurch gekennzeichnet, dass** die elastischen Verformungselemente (6, 7) auf den Körper (5) vulkanisiert sind.

5. Dichtungselement (3) nach einem der Ansprüche 1 bis 3, **dadurch gekennzeichnet, dass** die elastischen Verformungselemente (6, 7) O-Ringe sind.

6. Dichtungsanordnung zum Abdichten einer Verbindung zwischen einem Rohr (2) und einer Passfläche (9), wobei sich das Rohr (2) senkrecht weg von der Passfläche (9) erstreckt, **dadurch gekennzeichnet, dass** die Anordnung ein Dichtungselement (3) nach einem der vorstehenden Ansprüche umfasst und das Dichtungselement (3) um das Rohr (2) herum und gegen die Passfläche (9) angeordnet ist.

7. Dichtungsvorrichtung nach Anspruch 6, **dadurch gekennzeichnet, dass** die Anordnung ein Presselement (4) mit einer Öffnung (12) für das Rohr (2) umfasst, wobei das Presselement (4) um das Rohr (2) herum angeordnet ist, um das Dichtungselement (3) gegen die Passfläche (9) zu pressen.

8. Dichtungsvorrichtung nach Anspruch 7, **dadurch gekennzeichnet, dass** der Querschnitt des Presselements (4) um die Öffnung (12) herum L-förmig ist und sich zur Passfläche (9) und zu dem Rohr (2) öffnet.

9. Dichtungsvorrichtung nach Anspruch 7 oder 8, **dadurch gekennzeichnet, dass** das Presselement (4) mit mehreren Öffnungen (12) zum Aufnehmen einer entsprechenden Anzahl von Rohren (2) und Dichtungselementen (3) versehen ist.

10. Dichtungsvorrichtung nach einem der Ansprüche 7 bis 9, **dadurch gekennzeichnet, dass** die Anordnung Befestigungselemente (8) zum Befestigen des Presselements (4) an der Passfläche (9) umfasst.

## Revendications

1. Élément d'étanchéité (3) pour un raccord de tuyau, ledit élément d'étanchéité (3) comprenant un corps annulaire (5) et étant pourvu d'un premier élément élastique (6), lequel est disposé sur le périmètre intérieur du corps (5), et d'un deuxième élément élastique (7) disposé sur une surface terminale du corps (5), ledit corps (5) comprenant une partie centrale (5a) et une première bride (5b) et une deuxième bride (5c), lesdites brides (5b, 5c) étant disposées sur les bords de la partie centrale (5a), tout en s'étendant de la partie centrale (5a) à l'axe médian (11) du corps (5), le diamètre intérieur du premier élément élastique (6) dans l'élément d'étanchéité étant inférieur au diamètre intérieur des première (5b) et deuxième (5c) brides du corps (5), **caractérisé en ce que** le diamètre intérieur du deuxième élément élastique (7) est supérieur au diamètre intérieur de la première bride (5b) du corps (5).

2. Élément d'étanchéité (3) selon la revendication 1, **caractérisé en ce que** le premier élément élastique (6) est disposé sur le périmètre intérieur de la partie centrale (5a) du corps (5) entre la première bride (5b) et la deuxième bride (5c), et le deuxième élément élastique (7) est disposé sur la surface extérieure de la première bride (5b).

3. Élément d'étanchéité (3) selon la revendication 1 ou 2, **caractérisé en ce que** le corps (5) de l'élément d'étanchéité (3) est constitué d'un métal ou d'un alliage.

4. Élément d'étanchéité (3) selon l'une quelconque des revendications précédentes, **caractérisé en ce que** les éléments élastiques (6, 7) sont vulcanisés sur le corps (5).

5. Élément d'étanchéité (3) selon l'une quelconque des revendications 1-3, **caractérisé en ce que** les éléments élastiques (6, 7) sont des joints toriques.

6. Dispositif d'étanchéité destiné à assurer l'étanchéité entre un tuyau (2) et une surface d'accouplement (9), le tuyau (2) s'étendant perpendiculairement à distance de la surface d'accouplement (9), **caractérisé en ce que** le dispositif comprend un élément d'étanchéité (3) selon l'une quelconque des revendications précédentes, l'élément d'étanchéité (3) étant disposé autour du tuyau (2) et contre la surface d'accouplement (9).

7. Dispositif d'étanchéité selon la revendication 6, **caractérisé en ce que** le dispositif comprend un élément de pression (4) présentant une ouverture (12) pour le tuyau (2), l'élément de pression (4) étant disposé autour du tuyau (2) pour presser l'élément d'étanchéité (3) contre la surface d'accouplement (9).

8. dispositif d'étanchéité selon la revendication 7, **caractérisé en ce que** la section transversale de l'élément de pression (4) autour de l'ouverture (12) présente une forme en L et s'ouvre sur la surface d'accouplement (9) et le tuyau (2).

9. Dispositif d'étanchéité selon la revendication 7 ou 8, **caractérisé en ce que** l'élément de pression (4) est doté d'une pluralité d'ouvertures (12) destinées à accueillir un nombre correspondant de tuyaux (2) et d'éléments d'étanchéité (3).

10. Dispositif d'étanchéité selon l'une quelconque des revendications 7-9, ledit dispositif comprenant des éléments de fixation (8) permettant de fixer l'élément de pression (4) à la surface d'accouplement (9).
